# EUROPÄISCHE PATENTANMELDUNG

(11) **EP 0 952 371 A2**
(43) Veröffentlichungstag der Anmeldung: **27.10.1999**
(21) Anmeldenummer: 99105867.8
(22) Anmeldetag: 23.03.1999
(51) Int. Cl.: F16F 13/26, F16F 13/10

(54) **Aggregatlager**

(30) Priorität: 23.03.1998 DE 19812673
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Herrmann, Waldemar, 63637 Lettgenbrunn (DE); Ritzenthaler, Marc, 6800 Colmar (FR); Wolf, Anton, Dr., 63571 Gelnhausen (DE)
(74) Vertreter: Jaeger, Klaus, Dr.

(57) **Zusammenfassung**

Ein Aggregatlager, insbesondere für Kraftfahrzeuge,ist gekennzeichnet durch einen konstruktiv integralen Verbund eines konventionellen Lagers, insbesondere Hydrolagers (3), mit einem zuschaltbaren oder deaktivierbaren hydraulischen Schaltmodul (4) zur anpassenden Änderung der Aggregatlagerkenndaten an sich ändernde Betriebsbedingungen des Aggregats. Das Schaltmodul ist zwischen einer widerlagerseitigen Bodenplatte (12) des konventionellen Lagerteils und einem Widerlageranschlußstück (2) des Aggregatlagers eingefügt.

## Beschreibung

Die Erfindung betrifft ein Aggregatlager, prinzipiell für beliebige Zwecke, speziell jedoch für Kraftfahrzeuge.

Aggregatlager oder sogenannte 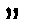 Motorlager", lagern ein Antriebsaggregat eines Kraftfahrzeugs auf dem Fahrwerksrahmen. Solche Lager sollen Aggregatschwingungen federn, dämpfen und insbesondere akustisch und subakustisch abkoppeln. Diesen Aufgaben werden Lager der verschiedensten Art in recht unterschiedlicher Weise gerecht. Dabei haben sich vor allem Gummi-Metall-Lager sowohl mit als auch ohne hydraulischer Dämpfung durchgesetzt, die die verschiedensten Bauprinzipien aufweisen.

Da es kaum ein einzelnes Lager gibt, das dem breiten Anspruch an den Fahrzeugkomfort gerecht werden kann, sind bereits auch zahllose Lager bekanntgeworden, die ein Verstellen oder Umstellen oder Modifizieren der Lagerkenndaten zum Ziel haben. Im Bereich der Feststofflager, also vor allem der Gummi-Metall-Lager, wird versucht, durch Profilierung der Gummifederkörper einen jeweils gewünschten Federkennlinienverlauf anpassend einzustellen. Bei Hydrauliklagern, also Lagern mit hydraulischer Dämpfungsflüssigkeit, sind vor allem solche Lager bekanntgeworden, bei denen die rheologischen Eigenschaften der Dämpfungsflüssigkeiten durch den Einfluß elektrischer oder magnetischer Felder bewirkt werden.

In ihrer Effektivität sind alle bekannten Lager dieser Art dadurch eingeschränkt, daß die bekannten Mittel und Verfahren zum Steuern der Lagerkenndaten von Aggregatlagern nur vergleichsweise schmale und homogene Bereiche und Bänder an Frequenzen und Amplituden aufzufangen vermögen. Lager, die sowohl solche Schwingungen zu isolieren vermögen, die beispielsweise von einem mit niedriger Drehzahl im Leerlauf laufenden Motor herrühren als auch solche Schwingungen abzukoppeln und dämpfen zu können, die von einem im höheren Drehzahlbereich laufenden Motor in einem fahrenden Fahrzeug erzeugt werden.

Ausgehend von diesem allgemeinen Stand der Technik liegt der Erfindung die Aufgabe zugrunde, ein Aggregatlager zu schaffen, und zwar insbesondere ein Aggregatlager für Kraftfahrzeuge, das sowohl niederfrequente Schwingungen mit großen Amplituden, wie sie typischerweise von einem im Leerlauf laufenden Motor erzeugt werden, als auch die höherfrequenten und hochfrequenten Schwingungen mit kleinen Amplituden abzukoppeln und zu dämpfen, die von höher drehenden und schneller fahrenden Fahrzeugen am Antriebsaggregat erzeugt werden.

Diese Aufgabe löst die Erfindung durch ein Aggregatlager, das die im Anspruch 1 genannten Merkmale aufweist.

Der wesentliche Erfindungsgedanke beruht also darauf, ein Aggregatlager an sich bekannter Art zur Adaption an unterschiedlichste Betriebsbedingungen des zu lagernden Aggregats nicht dadurch anzupassen, daß das Lager selbst zusätzlich komplizierter modifiziert und in die eigentlichen Lagerdaten zunehmend empfindlicher eingegriffen wird, sondern löst diese Aufgabe dadurch, daß das eigentliche konventionelle und ausgereifte Lager selbst auf ein Schaltmodul aufgesetzt, und zwar mit diesem zu einer Baugruppe integriert aufgesetzt wird, dessen spezifische Lagerkenndaten zu den Lagerkenndaten des konventionellen Lagers zuschaltbar oder von diesen abkoppelbar sind. Bei zugeschaltetem Schaltmodul werden also die Kenndaten des konventionellen Lagers durch die Kenndaten des Schaltmoduls verändert, während bei deaktiviertem oder abgeschaltetem Schaltmodul das konventionelle Lager bzw. Lagerteil unter Fixierung oder Festsetzung des Schaltmoduls unmittelbar und direkt auf das Widerlageranschlußstück des Aggregatlagers übertragen werden. Das Schaltmodul weist also im deaktivierten Zustand im Idealfall absolut neutrale Übertragungskenndaten auf.

Ein solcherart vollkommen übertragungsneutrales Verhalten wird jedoch in der Regel nur mit größerem Aufwand realisierbar sein und aus akustischen Gründen auch häufig nicht unbedingt wünschbar sein. Aus diesem Grunde weist die Gesamtstruktur des Aggregatlagers bei deaktiaviertem Schaltmodul vorzugsweise ein Übertragungsverhalten auf, das als 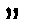 weitgehend neutral gummigedämpft" bezeichnet werden kann.

Das Aggregatlager mit dem Schaltmodul gemäß der Erfindung kann sowohl in Verbindung mit klassischen Feststofflagern, insbesondere Gummi-Metall-Lagern, als auch mit komplizierteren Hydrolagern eingesetzt und verwendet werden. Dabei ist das Schaltmodul konstruktiv vorzugsweise in Baueinheit mit dem eigentlichen konventionellen Lagerteil zu einem einheitlichen neuen Aggregatlager zusammengefügt. Das Schaltmodul ist dabei vorzugsweise über das und mit dem Lagergehäuse des konventionellen Lagerabschnitts an die Lagerfunktion angekoppelt.

Prinzipiell kann ein solches Schaltmodul sowohl mechanisch gesteuert, als auch elektrisch, elektromagnetisch oder ggf. auch pneumatisch steuerbar und stellbar ausgebildet sein. Vorzugsweise, insbesondere bei der Verwendung im Kraftfahrzeugbau, ist das Aggregatlager gemäß der Erfindung jedoch pneumatisch schaltbar und wirkt dabei im aktivierten oder zugeschalteten Zustand insbesondere nach Art eines Hydro-Teilelagers. Dabei kommt man vor allem dann auch mit einfachen Konstruktionen zu überraschend effektiven Ergebnissen, wenn das Schaltmodul mit einer hydraulischen Arbeitskammer versehen ist, und zwar in der Weise, daß das Schaltmodul deaktiviert ist, wenn das Arbeitsfluid in der Arbeitskammer bei verschlossener Kammer drucklos ist, während es, ebenfalls im geschlossenen System, im zugeschalteten, aktivierten Zustand des Schaltmoduls unter Druck steht. Hierbei können insbesondere hydraulische axial wirkende Abstandsvergrößerungen erzeugt werden, die ein Lösen der axialen und radialen Fixierung des Schaltmoduls gegenüber dem konventionellen Lagerteil bewirken.

Dabei versteht sich von selbst, daß das Schaltmodul des Aggregatlagers der Erfindung zwar vorzugsweise auf der Widerlagerseite des Lagers integriert werden kann, jedoch ohne weiteres auch kinematisch umgekehrte Lösungen realisierbar sind, bei denen das Schaltmodul zwischen dem Auflagerstück des Lagers und der Tragfeder des konventionellen Lagerabschnitts eingefügt ist.

Ebenso kann das Schaltmodul auch bei hydraulischer Ausführung insbesondere im Federbereich durch andere Mittel unterstützend erweitert ausgebildet sein, beispielsweise mit einer zusätzlichen Gummifeder oder Stahlfeder, insbesondere Spiral-Druckfeder, ausgestaltet sein. Die entscheidende Funktion des Schaltmoduls bleibt dabei jedoch stets, im deaktivierten Zustand die Kenndaten des klassischen Lagerteils möglichst unverfälscht wirksam werden zu lassen und im aktivierten Zustand den konventionellen Lagerabschnitt selbst so weich und schwimmend und dreidimensional beweglich zu lagern, daß auch niederfrequente Schwingungen mit hohen Amplituden, wie sie von einem im Leerlauf arbeitenden Aggregat erzeugt werden, möglichst vollkommen zu entkoppeln und zu tilgen.

Die Erfindung ist im folgenden anhand eines Ausführungsbeispiels näher erläutert. Es zeigen:
- Fig. 1: im Axialschnitt ein Ausführungsbeispiel des Aggregatlagers der Erfindung im deaktivierten Zustand;
- Fig. 2: das in Fig. 1 gezeigte Lager im gleichen Schnitt, jedoch im aktivierten Zustand;

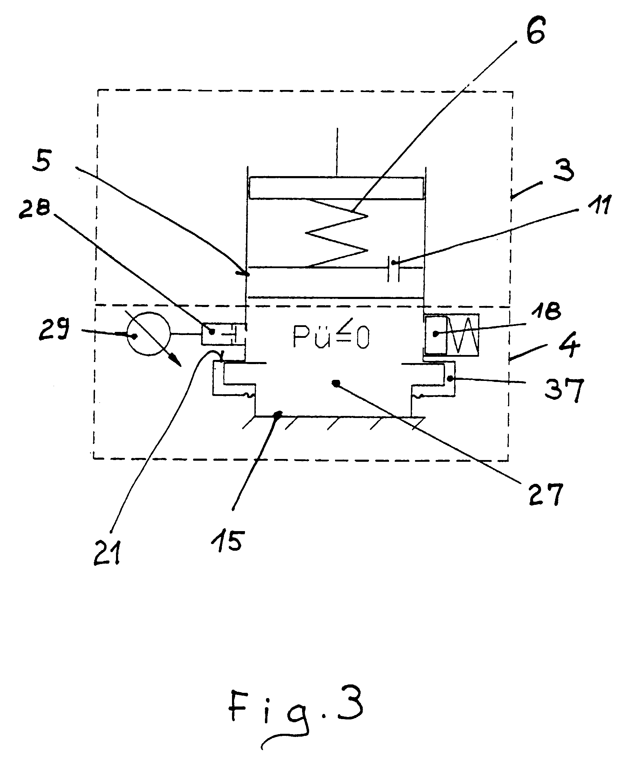

- Fig. 3: das in Fig. 1 gezeigte Lager als Funktionsschaltbild; und

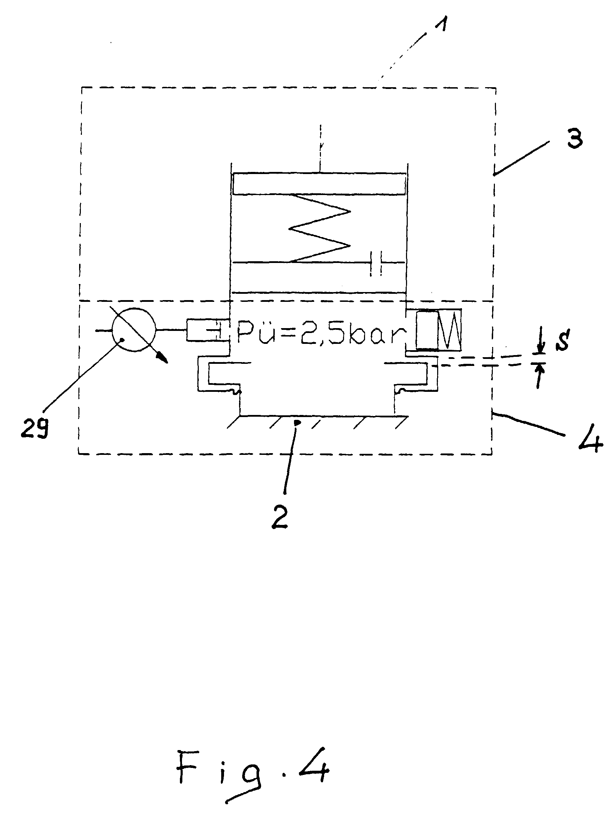

- Fig. 4: das in Fig. 2 gezeigte Lager in der in Fig. 3 gezeigten Darstellungsweise.

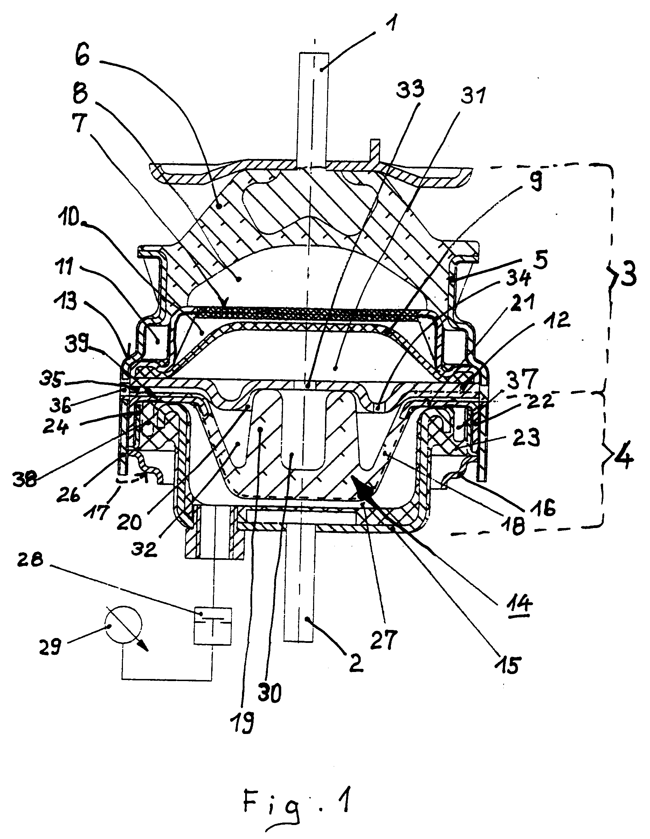

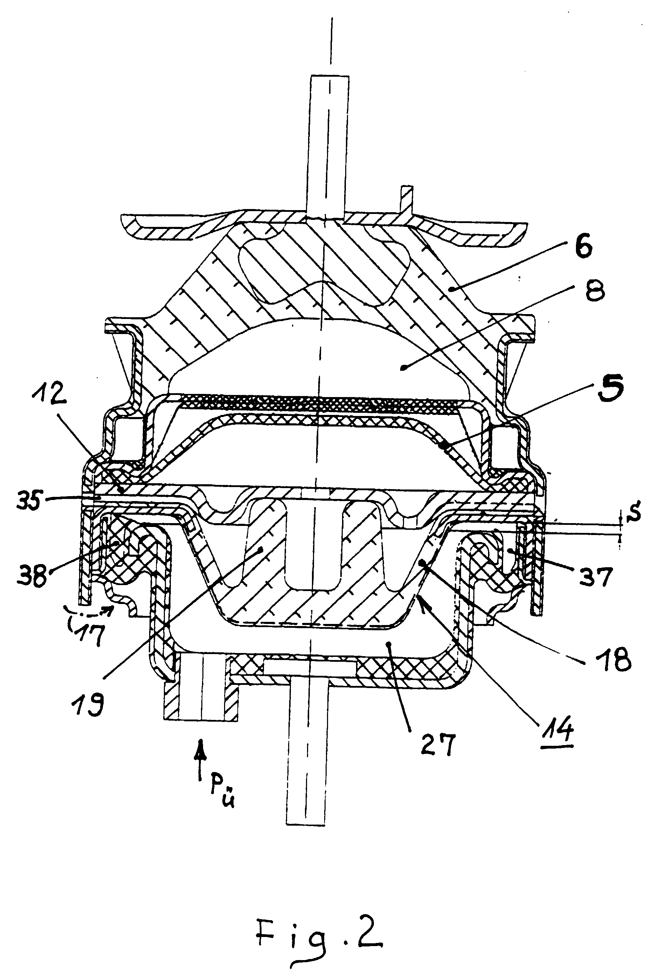

Das in den Figuren 1 und 2 im Axialschnitt gezeigte Aggregatlager besteht zwischen einem Auflageranschlußstück 1 und einem Widerlageranschlußstück 2 aus einem konventionellen Hydrolager 3 und einem hydraulischen Schaltmodul 4. Das Hydrolager besteht in an sich bekannter und gebräuchlicher Weise aus einem Gehäuse 5, in dem begrenzt von einer Tragfeder 6 und einem Zwischenboden 7 eine hydraulische Arbeitskammer 8 und zwischen dem Zwischenboden 7 und einer Ausgleichsmembran 9 eine Ausgleichskammer 10 ausgebildet ist. Die Arbeitskammer 8 und die Ausgleichskammer 10 sind über einen Drosselkanal 11 hydraulisch miteinander verbunden. Das konventionelle Hydrolager 3 ist widerlagerseitig durch eine profilierte Bodenplatte 12 abgeschlossen, die die Ausgleichsmembran 9 an einer Schulter 13 des Gehäuses 5 fluiddicht einspannt.

Das hydraulisch schaltbare Schaltmodul 4 besteht im wesentlichen aus einem Blähfedereinsatz 14, einem Modulgehäuse 15 und einem Abdeckring 16.

Beim Zusammenbau des Aggregatlagers werden die vorstehend genannten Teile, aus denen das Schaltmodul besteht, in der genannten Reihenfolge in das widerlagerseitig zylindrisch offen verlaufende Gehäuse des konventionellen Lagerteils 3 eingelegt, wie dies in den Figuren 1 und 2 dargestellt ist. Zur Fertigstellung wird dann der von diesem zylindrischen Lagergehäuseabschnitt überstehende Randabschnitt in der durch den Pfeil 17 in Fig. 1 angedeuteten Weise umgebördelt, wodurch sowohl das Lager als auch das Schaltmodul fluiddicht und als integrale Baueinheit verschlossen und miteinander verbunden werden.

Das Blähfedereinsatzteil 15 besteht im wesentlichen aus einer gewebeverstärkten kegelmantelförmigen Blähfeder 18, einer einstückig mit dieser Feder ausgebildeten zylinderringförmigen Tragfeder 19, die in einer formkomplementären Vertiefung 20 der Bodenplatte 12 des Lagers 3 abgestützt ist, und einem in den Blähfederwerkstoff einvulkanisierten Blähfederflansch 21, der in eine zylindrische, zum Widerlager hin herabgezogene Zarge 22 übergeht. In diesen Zylinderring des Blähfedereinsatzes greift eine Radialfeder 23 ein, in deren peripheren Bereich ebenfalls eine zylindrische Stahlverstärkung 24 einvulkanisiert ist.

Die Radialfeder 23 umschließt auflastseitig den rinnenförmig umgebogenen und dadurch verstärkten Rand des Modulgehäuses 15. Dabei ist der Außendurchmesser des Modulgehäuseflansches 25 deutlich kleiner als der Innendurchmesser der zylindrischen Verstärkung 24. Dieser Verstärkungsring 24 ist über die Radialfeder 23 flexibel mit dem Modulgehäuseflansch 25 verbunden. Demgegenüber bilden die zylindrische untere Zarge 26 des Lagergehäuses 5, der zylindrische Abschnitt 22 des Blähfederflansches 21 und die zylindrische Verstärkung 24 der Radialfeder 23 einen kraftschlüssigen und formschlüssig durch die Bördelung der Zarge 26 bewirkten Verbund.

Zwischen der Blähfeder 18 und dem Schaltmodulgehäuse 15 ist die hydraulische Arbeitskammer 27 des Schaltmoduls definiert, die im folgenden kurz als 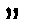 Innenkammer" bezeichnet ist.

Die Innenkammer 27 ist über ein Stellventil 28 hydraulisch verschließbar, bzw. zugänglich und kann über eine Hydraulikpumpe 29 druckbeaufschlagt werden.

Der Innenraum 30, 31, 32 zwischen der Blähfeder 18 und der Ausgleichsmembran 9 ist über die Öffnungen 33, 34 den Kanal 35 und die Außenöffnung 36 drucklos belüftet.

Schließlich sind in der Radialfeder 23 Außenkammern 37 ausgebildet, die durch Stege 38 voneinander getrennt sind. Diese Außenkammern 37 sind mit demselben Arbeitsfluid gefüllt, mit dem auch die Innenkammer 27 gefüllt ist.

In dem in Fig. 1 gezeigten Zustand ist das Arbeitsfluid in der Innenkammer 27 drucklos gehalten. Auch das Arbeitsfluid in den Außenkammern 27 ist drucklos. Das Stellventil, vorzugsweise elektrisch stellbare Stellventil 28, ist geschlossen. Unter der statischen Last des am Auflageranschlußstück 1 angeschlossenen Aggregats, allgemein, der zu lagernden Last, ist die widerlagerseitige Oberfläche des Blähfederflansches dichtend auf die auflagerseitige Flanschfläche des Schaltmodulgehäuseflansches aufgepresst, wodurch die Innenkammer hermetisch fluiddicht von den Außenkammern abgetrennt wird. Die Dichtheit wird dabei durch eine umlaufende Dichtwulst 39 noch verbessert. Wenn nach dem statischen Einsinken des Aggregatlagers das Stellventil 28 geschlossen wird, ist das konventionelle Hydrolager 3 sowohl axial über die geschlossenen Außenkammern 37 als auch radial über die geschlossene Innenkammer 27 und die nach radial außen durch die Gewebeeinlage blähsteife Blähfeder 18 in Zugrichtung bzw. in Druckrichtung durch die Auflage des Blähfederflansches auf dem Schaltmodulgehäuseflansch axial formschlüssig bzw. kraftschlüssig fixiert. Das Schubmodul ist ausgeschaltet bzw. deaktiviert. Die Lagerkenndaten des Aggregatlagers sind also ausschließlich durch die Lagerdaten des konventionellen Hydrolagers 3 bestimmt.

Wird dagegen das Stellventil 28 bei laufender Hydraulikpumpe 29 geöffnet, so wird in der hydraulischen Arbeitskammer 27 ein Druck auf die Blähfeder 18 und die Ringfeder 19 aufgebaut, der schließlich in der in Fig. 2 gezeigten Weise das Hydrolager 23 mit dem auf diesem lagernden Aggregat so weit anhebt (S), daß die Außenkammern 37 mit der Innenkammer 27 hydraulisch unter Druckausgleich miteinander kommunizieren. Während die Radialfeder nunmehr in radialer Richtung, d.h. in X-Richtung sowohl als auch in Y-Richtung, frei federnd wirksam wird, sorgt dieselbe Radialfeder 23 im Verbund mit der radial einwärts möglichen Blähbarkeit der Blähfeder 18 und ihrer Flexibilität in Z-Richtung zusätzlich für eine auch axial federnde Lagerung des Hydrolagers 3 auf dem Schaltmodul 4. Mit anderen Worten, das Hydrolager 3 ist auf oder in dem Schaltmodul 4 unter diesen Betriebsbedingungen kardanisch weich federnd, gleichsam 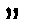 federnd schwimmend" gelagert. Dadurch können in dem jetzt zugeschalteten Schaltmodul 4 (Fig. 2) auch große Amplituden (S) abgefedert, entkoppelt und gedämpft werden, wie sie beim Leerlauf, insbesondere bei niedrigen Leerlaufzahlen, von aufgelagerten Aggregaten in das Auflageranschlußstück 1 eingeleitet werden.

Durch ein Öffnen des Stellventils 28 und Öffnen einer im einzelnen nicht dargestellten Rücklaufleitung für das Arbeitsfluid kann das Aggregatlager aus dem in Fig. 2 gezeigten aktivierten Zustand wieder in den versteifenden ausgeschalteten Zustand zurückkehren, der in der Fig. 1 dargestellt ist. Dabei schließt das Stellventil 28 wieder, sobald der Blähfederflansch wieder dichtend auf dem Schaltmodulgehäuseflansch aufliegt und der Druckausgleich in der Innenkammer des Schaltmoduls wieder hergestellt ist.

## Patentansprüche

1. Aggregatlager, insbesondere für Kraftfahrzeuge,
**gekennzeichnet** durch
den konstruktiv integralen Verbund eines konventionellen Lagers (3) mit einem zuschaltbaren oder deaktivierbaren Schaltmodul (4) zur anpassenden Änderung der Aggregatlagerkenndaten an sich ändernde Betriebsbedingungen.

2. Aggregatlager nach Anspruch 1,
**gekennzeichnet** durch
ein Schaltmodul (4), das zwischen einer widerlagerseitigen Bodenplatte (12) des konventionellen Lagerteils (3) und einem Widerlageranschlußstück (2) des Aggregatlagers eingefügt ist.

3. Aggregatlager nach einem der Ansprüche 1 oder 2,
**gekennzeichnet** durch
ein hydraulisches Schaltmodul (4), das drucklos deaktiviert und unter hydraulischem Überdruck zugeschaltet aktiviert ist.

4. Aggregatlager nach einem der Ansprüche 1 bis 3,
**gekennzeichnet** durch
eine sowohl radial als auch axial fixierend formschlüssige oder kraftschlüssige wieder lösbare Anbindung des konventionellen Lagerteils (3) an das Widerlager (2) des Aggregatlagers bei deaktiviertem Schaltmodul (4).

5. Aggregatlager nach einem der Ansprüche 1 bis 4,
**gekennzeichnet** durch
eine dreidimensional federnde Ankopplung (18, 19, 23) des konventionellen Lagerteils (3) an das Widerlager (2) des Aggregatlagers bei zugeschaltetem Schaltmodul,

6. Aggregatlager nach einem der Ansprüche 1 bis 5,
**gekennzeichnet** durch
ein hydraulisches Schaltmodul (4) mit einer im deaktivierten Zustand drucklosen verschlossenen blähsteifen Arbeitskammer (27).

7. Aggregatlager nach einem der Ansprüche 1 bis 6,
**gekennzeichnet** durch
eine im aktivierten Zustand mit einem solchen hydraulischen Überdruck beaufschlagte hydraulische Arbeitskammer (27) des Schaltmoduls (4), der grösser als die am Lastanschlussstück (1) anliegende Last ist.

8. Aggregatlager nach einem der Ansprüche 1 bis 7,
**gekennzeichnet** durch
eine Ausbildung des Schaltmoduls (4) als widerlagerseitig integrierbares Nachrüstteil für konventionelle Serienlager (3).

9. Aggregatlager nach einem der Ansprüche 1 bis 8,
**gekennzeichnet** durch
eine Intergration des Schaltmoduls (4) im Gehäuse (5) des konventionellen Lagerteils (3).

10. Verwendung des Aggregatlagers gemäss einem der Ansprüche 1 bis 9 zur Motorleerlaufentkopplung im Kraftfahrzeugbau.
